Europäisches Patentamt

(19) European Patent Office    (11) Publication number: **0 062 389**

Office européen des brevets    **B1**

(12) **EUROPEAN PATENT SPECIFICATION**

(45) Date of publication of patent specification: **23.07.86**    (51) Int. Cl.⁴: **C 08 G 12/38,** C 08 G 12/12,
C 09 J 3/16, C 08 L 61/30,
C 08 L 97/02

(21) Application number: **82200427.1**

(22) Date of filing: **07.04.82**

(54) **Manufacture of particle board and a novel suitable bonding agent.**

(30) Priority: **07.04.81 NL 8101700**

(43) Date of publication of application:
**13.10.82 Bulletin 82/41**

(45) Publication of the grant of the patent:
**23.07.86 Bulletin 86/30**

(84) Designated Contracting States:
**AT BE DE FR IT NL SE**

(56) References cited:
**EP-A-0 001 596**
**EP-A-0 013 447**
**EP-A-0 037 878**
**GB-A- 524 350**
**GB-A- 627 167**
**US-A-2 772 197**

**INTERNATIONAL POLYMER SCIENCE AND
TECHNOLOGY, vol. 1, no. 5, 1974, pages 60-62;
W. SZLEZYNGIER et al.: "Studies of reduction
in the free formaldehyde content of urea-
formaldehyde adhesive resins"**

**CHEMICAL ABSTRACTS, vol. 83, 1975, page 63,
no. 80460b, Columbus Ohio (USA);**

**The file contains technical information
submitted after the application was filed and
not included in this specification**

(73) Proprietor: **METHANOL CHEMIE NEDERLAND
V.o.F.**
**P.O. Box 57 Rijksstraatweg 32**
**NL-9750 AB Haren (NL)**

(72) Inventor: **Hoetjer, Jan Jacob**
**Rijksweg 61**
**NL-9791 AA Ten Boer (NL)**

(74) Representative: **Leherte, Georges Maurice
Lucien Marie et al**
**Octrooibureau DSM P.O.Box 9**
**NL-6160 MA Geleen (NL)**

Courier Press, Leamington Spa, England.

## Description

The invention relates to a method for the manufacture of particle board by hardening at elevated temperature and pressure of cellulose-containing material with an aminoplast resin as bonding agent, as well as a bonding agent suitable in such a method.

It is known to manufacture chipboard with a urea-formaldehyde resin as bonding agent. If the molar ratio between formaldehyde and urea is high, e.g. above 1.3 or more, the board may release formaldehyde to the environment for a long time. Applicant has found that it is possible to produce board having a very low emission by using a urea-formaldehyde resin with a molar ratio of formaldehyde to urea of about 1.1, but that the mechanical properties of board produced by such a method are unsatisfactory, and especially so if the boards are stacked after pressing while still warm. An important disadvantage is also that, regardless of the stacking, the boards show considerable swelling when in contact with water. Applicant moreover found that the use of an greater than conventional amount of such bonding agent can overcome this disadvantage only to a limited extent.

The goal of the invention is a method for the manufacture of chipboard having a lower formaldehyde emission and satisfactory mechanical properties, and as well as a bonding agent suitable in such method.

According to the invention, particle board with an urea-formaldehyde resin as bonding agent is produced by effecting the conventional steps of providing a cellulose-containing particulate material with the bonding agent and next hardening said material at an elevated temperature and pressure to form a board, wherein the bonding agent is an urea-formaldehyde resin solution having a molar ratio of formaldehyde to mole equivalents of amino groups of between 0.500 to 1 and 0.575 to 1, and containing melamine in an amount of between 1.0 and 10% by weight, relative to the total amount of resin solids.

By using the method according to the present invention with the novel bonding agent, it is possible to manufacture chipboard with a very low formaldehyde emission and yet satisfactory mechanical properties.

The cellulose-containing material may consist of wood chips or fibres, pine or hard wood, of conventional size. The bonding agent is applied to the material by a conventional method, such as spraying or tumbling. The amount applied may be between 6 and 15% by weight, calculated as resin solids relative to the dry chips. The preferred amount is between 8 and 12% by weight. The chip material may further be provided with conventional additives such as a moisture repellent, a curing catalyst, fungicides or other anti-microbial agents or defoamers. Such additives may be applied together with the resin solution or separately. The chip material is then formed into a chip mat and said mat is hardened to form chipboard at a temperature of between 140°C and 220°C and a pressure of up to 3.5 N/mm².

The bonding agent is a melamine-modified urea-formaldehyde resin solution with a molar ratio of formaldehyde to mole equivalents of amino groups of between 0.500 and 1 and 0.575 to 1. A bonding agent with a ratio of between 0.525 to 1 and 0.565 to 1, for instance about 0.55 to 1, is preferably used, as in this case an optimal combination of satisfactory mechanical strength and a low formaldehyde emission is obtained.

The ratio of formaldehyde to mole equivalents of aminogroups ($F/NH_2$ ratio) can easily be calculated by determining the total amount of moles of urea and melamine which have been used in the preparation of the bonding agent and calculating on the basis of these data the total amount of mole equivalents of amino groups. The amount of formaldehyde used will also be known, so that the ratio $F/NH_2$ may be calculated.

One may also determine the molar ratio of formaldehyde to urea, i.e. disregarding the melamine. This molar ratio will generally be not more than about 1.2:1 and will in particular be between about 1.1:1 and 1.18:1.

The melamine content of the bonding agent is very low and notably lower than that of conventional melamine-modified urea-formaldehyde resin solutions. The melamine content is between 1.0 and 10% by weight calculated relative to the total amount of resin solids and preferably between 1.5 and 9% by weight. At a low melamine content, e.g. about 2% by weight, it may be advisable to use a rather large amount of resin relative to the chips while a fairly large melamine content, e.g. about 8% by weight, should be used when it is intended to use a relatively small amount of bonding agent relative to the chips. A melamine content of between 3 and 6% by weight may be preferred for general purposes.

Although for the purpose of various calculations the melamine is taken as the pure chemical compound, the melamine is actually present in the form of a melamine-formaldehyde condensate or as melamine-urea-formaldehyde cocondensate.

The solids content of the resin solution is of minor importance, as long as it is possible to bring the resin solution to a viscosity suitable for spraying. In most instances, the solids content is between 50 and 75% by weight. The expression solids or resin solids as used herein means the dry residue remaining after evaporation of the resin solution for two hours at 120°C.

The novel bonding agent may be prepared by several methods. One may for instance first effect a condensation of urea and formaldehyde and add melamine in the course of the condensation, preferably in the last stage. The condensation can be effected conventionally, for instance at a pH between 4 and 8 and a temperature between 75°C and the boiling point of the solution. In many cases the formaldehyde to urea ratio is somewhat higher at the start, e.g. between 1.6 to 1 and 3.0 to 1, and the required additional amount of urea is added at a later stage of the condensation. A limited amount of the urea may even be added after completion of the condensation reaction. A melamine-formaldehyde resin may be added instead of pure melamine. It is also possible to separately prepare a urea-formaldehyde resin solution having a low formaldehyde to urea ratio and add a melamine-formaldehyde resin thereto after completion of the condensation. The melamine-formaldehyde resin may have a conventional molar ratio of formaldehyde to melamine, for instance between 1.5 to 1 and 1.8 to 1. It is also possible to take a conventional melamine-modified urea-formaldehyde resin and mix this, if required with heating, with a urea-formaldehyde resin having a much lower formaldehyde to urea ratio and optionally with an additional amount of urea.

The reactivity of an aminoplast adhesive is determined by adding a standard amount of catalyst (usually ammonium chloride) to the resin solution and measuring the gel time. The gel time is the time in which an aliquot of catalysed resin solution sealed in a glass tube suspended in an oil bath at 100°C is converted to a gel. It is generally thought that in order to obtain a good curing and a strong bond, the adhesive should have a fairly short gel time, say between 40 and 90 seconds. The adhesive solutions according to the invention have long gel times, e.g. 100 to 250 seconds with conventional amounts of catalyst. Yet such catalysed adhesive solutions can be used to produce particle board with improved physical properties. It is to be noted that this phenomenon of the increase in gel time does not occur with the conventional resins in which 25% by weight or more melamine has been incorporated. Applicant assumes that in the such latter case the curing of the melamine resin content, which occurs at a pH close to neutral, overshadows the buffering action of melamine.

The invention will now be elucidated by means of the following examples, without being restricted to the modes of realisation described therein.

Example 1

In a conventional resin kettle, 29 kg of formaldehyde (37%) and 9.75 kg of urea were mixed and heated to the boiling point. Next the pH was brought to a value of 5 by addition of hydrochloric acid, which started the reaction. After a condensation period of 50 minutes at the boiling point, the reaction was quenched by adding enough of a base (sodium hydroxide) to bring the pH to a value of 8. Next, 1.24 kg of melamine were added to the reaction mixture while keeping the pH at a value of 8 and the temperature near the boiling point. The mixture was stirred for half an hour, after which 9.75 kg of urea were added and enough water was distilled off to bring the solids content to 65% by weight. The solids content was determined by heating a sample for 2 hours at 120°C and weighing the residue. Thereafter the reaction mixture was cooled. In this way 39.8 kg of resin solution, adhesive A, were obtained, with a melamine content of 4.77% by weight and a $F/NH_2$ of 0.526.

This resin solution was used as the bonding agent in the preparation of chipboard of 17 mm thickness. To this end, chips were provided with the catalysed adhesive and strewn by hand to form a mat with thin outer layers and a thicker core layer. This mat was then pressed to form a board. The chips had previously been provided with 0.4% by wt. of a wax-based water-repelling agent (Mobilcer, RTM). The amount of bonding agent used was 11% by weight of resin solids, relative to dry chips in all layers. The press temperature was 180°C and the pressure 3.4 N/mm². The chipboard thus obtained had the following properties:

| | |
|---|---|
| density | 680 kg/m³ |
| tensile strength | 0.64 N/mm² |
| swelling (24 hrs. immersion at 20°C) | 14.3% |
| water content | 7.1% |
| formaldehyde emission (FESYP perforator test). | 0.008% by wt. |

Example 2

Adhesives B and C were prepared by the method disclosed in Example 1. For adhesive B the amount of melamine added in the second step was 0.80 kg and the amount of urea added in the last step was 9.96 kg. For adhesive C these amounts were respectively 1.62 kg of melamine and 9.56 kg of urea. As a comparison, adhesive Y was prepared by the same method, however without the addition of melamine and with addition of 10.34 kg of urea in the last step. Adhesive B contains 3.08% by wt. of melamine and has a $F/NH_2$ ratio of 0.529. Adhesive C contains 6.15% by wt. of melamine and has a $F/NH_2$ ratio of 0.524. The comparative adhesive Y contains no melamine and has a $F/NH_2$ ratio of 0.534.

These adhesives were tested by using them to produce particle board by the process disclosed in Example 1. However, for the thin outer layers chips containing 12% by weight of adhesive, calculated on the dry (atro) chips, were used and for the core layer chips containing either 6 or 10 or 12% by weight of adhesive were used. The physical properties of the boards so obtained are presented in Table 1. All boards had a formaldehyde emission of less than 0.01% (perforator test).

3

TABLE 1

| Adhesive type | Adhesive, amount middle layer, wt.% | Density kg/m³ | Tensile strength N/mm² | Swelling, 24 hrs.% |
|---|---|---|---|---|
| B | 6 | 689 | 0.43 | 24.3 |
| C | 6 | 684 | 0.41 | 24.3 |
| Y* | 6 | 683 | 0.39 | 31.4 |
| B | 10 | 678 | 0.54 | 17.5 |
| C | 10 | 669 | 0.57 | 16.6 |
| Y* | 10 | 656 | 0.49 | 22.8 |
| B | 12 | 668 | 0.59 | 16.2 |
| C | 12 | 663 | 0.66 | 14.4 |
| Y* | 12 | 666 | 0.52 | 20.5 |
| A | 11% all layers | 680 | 0.64 | 14.3 |

* not according to the invention.

Example 3

An adhesive solution D was obtained by mixing a urea-formaldehyde resin solution with a small amount of melamine-formaldehyde resin solution. The resulting adhesive solution has a solids content of 56% by weight, a $F/NH_2$ ratio of 0.550 and a melamine content of 5.33% by weight based on resin solids. By the same method an adhesive solution E was prepared at a solids content of 53% by weight, a $F/NH_2$ ratio of 0.500 and a melamine content of 4.87% by weight based on resin solids. As a comparison, an adhesive Z was prepared having a solids content of 56% by weight, a $F/NH_2$ ratio of 0.550 which did contain only urea and no melamine.

These adhesives were used, after addition of a catalyst, to prepare particle board having a unitary structure and a thickness of 18 mm. The amount of adhesive was 9% by weight (resin solids on dry chips) in all cases and the press conditions were 180°C at 3.4 N/mm² for 17 seconds/mm of board thickness. In all cases, the gel time of the catalysed resin solution was determined. As a measure for the quality of the board, the tensile strength after 2 hours immersion in water of 20°C was determined (V-20 strength according to Dln 68763). The relevant data are presented in Table 2.

TABLE 2

| Adhesive | NH₄Cl wt.% on resin solid | 4 · HCl | Gel time sec. | Density kg/m³ | V-20 N/mm² | Swelling % (24 hrs.) |
|---|---|---|---|---|---|---|
| D | 1.5 | — | 180 | 612 | 0.65 | 13.4 |
| D | 1.5 | 3.5 | 129 | 619 | 0.78 | 13.1 |
| D | 1.5 | 5.0 | 95 | 617 | 0.76 | 12.9 |
| E | 1.5 | — | 220 | 614 | 0.68 | 21.5 |
| E | 1.5 | 4 | 130 | 625 | 0.67 | 15.7 |
| E | 1.5 | 7.5 | 93 | 617 | 0.75 | 16.5 |
| Z* | 0.15 | — | 180 | 594 | 0.16 | 17.2 |
| Z* | 0.25 | — | 120 | 571 | 0.09 | 15.6 |
| Z* | 0.75 | — | 84 | 608 | 0.74 | 13.3 |

*not according to the invention.

## Claims

1. Method for the preparation of particle board with an urea-formaldehyde resin as bonding agent by providing a cellulose-containing particulate material with the bonding agent and next hardening said material at an elevated temperature and pressure to form a board, characterised in that the bonding agent is an urea-formaldehyde resin solution having a molar ratio of formaldehyde to mole equivalents of amino groups of between 0.500 to 1 and 0.575 to 1 and containing melamine in an amount of between 1.0 and 10% by weight, relative to the total amount of resin solids.

2. Method according to Claim 1, characterised in that the bonding agent has a melamine content of between 1.5 and 9% by weight.

3. Method according to Claims 1—2, characterised in that the bonding agent has a melamine content of between 3 and 6% by weight.

4. Method according to Claims 1—3 characterised in that the bonding agent has a molar ratio of formaldehyde to mole equivalent of amino groups 0.525 to 1 and 0.565 to 1.

5. Method according to Claims 1—4, characterised in that the amount of bonding agent used is between 8 and 12% by weight calculated as resin solids relative to dry chips.

6. Urea-formaldehyde resin solution, characterised in that the molar ratio of formaldehyde to mole equivalents of amino groups is between 0.500 to 1 and 0.575 to 1 and that the solution contains between 1 and 10% by weight of melamine, relative to the total amount of resin solids.

7. Resin solution according to Claim 6, characterised in that the melamine content is between 1.5 and 9% by weight.

8. Resin solution according to Claim 6—7, characterised in that the melamine content is between 3 and 6% by weight.

9. Resin solution according to Claims 6—8, characterised in that the molar ratio of formaldehyde to mole equivalents of aminogroups 0.525 to 1 and 0.565 to 1.

10. Particle board, obtained by the method of one or more of Claims 1—5.

## Patentansprüche

1. Verfahren zur Herstellung von Spanplatten mit einem Harnstoff-Formaldehydharz als Bindemittel durch Versetzen eines Cellulose enthaltenden teilchenförmigen Materials mit dem Bindemittel und anschließendes Härten dieses Materials bei erhöhter Temperatur und erhöhtem Druck zur Bildung einer platte, dadurch gekennzeichnet, daß das Bindemittel eine Harnstoff-Formaldehydharzlösung mit einem molaren Verhältnis von Formaldehyd zu Moläquivalenten Aminogruppen zwischen 0,500 zu 1 und 0,575 zu 1 ist und Melamin in einer Menge zwischen 1,0 und 10 Gew.-%, bezogen auf die Gesamtmenge der Harzfeststoffe, enthält.

2. Verfahren nach Anspruch 1, dadurch gekennzeichnet, daß das Bindemittel einen Melamingehalt zwischen 1,5 und 9 Gew.-% hat.

3. Verfahren nach den Ansprüche 1—2, dadurch gekennzeichnet, daß das Bindemittel einen Melamingehalt zwischen 3 und 6 Gew.-% hat.

4. Verfahren nach den Ansprüchen 1—3, dadurch gekennzeichnet, daß das Bindemittel ein molares Verhältnis von Formaldehyd zu Moläquivalenten Aminogruppen zwischen 0,525 zu 1 und 0,565 zu 1 hat.

5. Verfahren nach den Ansprüchen 1—4, dadurch gekennzeichnet, daß die Menge des verwendeten Bindemittels zwischen 8 und 12 Gew.-%, berechnet als Harzfeststoffe bezogen auf trockene Späne, beträgt.

6. Harnstoff-Formaldehydharzlösung, dadurch gekennzeichnet, daß das molare Verhältnis von Formaldehyd zu Moläquivalenten Aminogruppen zwischen 0,500 zu 1 und 0,575 zu 1 beträgt und daß die Lösung zwischen 1 und 10 Gew.-% Melamin, bezogen auf die Gesamtmenge der Harzfeststoffe, enthält.

7. Harzlösung nach Anspruch 6, dadurch gekennzeichnet, daß der Melamingehalt zwischen 1,5 und 9 Gew.-% beträgt.

8. Harzlösung nach den Ansprüchen 6—7, dadurch gekennzeichnet, daß der Melamingehalt zwischen 3 und 6 Gew.-% beträgt.

9. Harzlösung nach den Ansprüchen 6—8, dadurch gekennzeichnet, daß das molare Verhältnis von Formaldehyd zu Moläquivalenten Aminogruppen zwischen 0,525 zu 1 und 0,565 zu 1 beträgt.

10. Spanplatten, erhalten nach dem Verfahren gemäß einem oder mehreren der Ansprüche 1—5.

## Revendications

1. Procédé de préparation d'un panneau aggloméré avec une résine urée-formaldéhyde à titre d'agent liant, en munissant une matière particulaire contenant de la cellulose avec un agent liant et ensuite en faisant durcir ladite matière à une température et sous une pression élevées pour former un panneau, caractérisé en ce que l'agent liant est une solution de résine urée-formaldéhyde ayant un rapport molaire de formaldéhyde aux équivalents molaires des groupes amino compris entre 0,500:1 et 0,575:1 et contenant de la mélamine en une proportion de 1,0 à 10% en poids par rapport à la quantité totale des solides de la résine.

2. Procédé selon la revendication 1, caractérisé en ce que le liant contient de la mélamine à raison de 1,5 à 9% en poids.

3. Procédé selon la revendication 1 et 2, caractérisé en ce que le liant contient la mélamine à raison de 3 à 6% en poids.

4. Procédé selon les revendications 1 à 3, caractérisé en ce que le liant présente un rapport molaire du formaldéhyde aux équivalents molaires des groups amino de 0,525:1 a6 0,565:1.

5. Procédé selon les revendications 1 à 4, caractérisé en ce que la quantité de liant utilisée est comprise entre 8 et 12% en poids calculée en solides de résine par rapport aux copeaux secs.

6. Solution de résine urée-formaldéhyde, caractérisée en ce que le rapport molaire du formaldéhyde aux équivalents molaires des groupes amino est compris entre 0,500:1 et 0,575:1 et en ce que la solution contient de 1 à 10% en poids de mélamine par rapport à la quantité totale des solides de la résine.

7. Solution de résine selon la revendication 6, caractérisée en ce que la teneur en mélamine est de 1,5 à 9% en poids.

8. Solution de résine selon la revendication 6 ou 7, caractérisée en ce que la teneur en mélamine est de 3 à 6% en poids.

9. Solution de résine selon les revendications 6 à 8, caractérisée en ce que le rapport molaire du formaldéhyde aux équivalents molaires des groupes amino est de 0,525:1 à 0,565:1.

10. Panneau aggloméré, obtenu par le procédé selon une ou plusieurs des revendications 1 à 5.